# EUROPEAN PATENT APPLICATION

(11) **EP 4 550 502 A1**
(43) Date of publication of application: **07.05.2025**
(21) Application number: 24738667.5
(22) Date of filing: 02.01.2024
(51) Int. Cl.: H01M 10/04, H01M 10/0583

(54) **ELECTRODE SUPPLY DEVICE, ELECTRODE ASSEMBLY MANUFACTURING DEVICE USING SAME, ELECTRODE SUPPLY METHOD, AND ELECTRODE ASSEMBLY MANUFACTURING METHOD USING SAME**

(30) Priority: 03.01.2023 KR 20230000709; 19.12.2023 KR 20230185680
(71) Applicant: LG Energy Solution, Ltd., Seoul 07335 (KR)
(72) Inventor: KIM, Jong Seok, Daejeon 34122 (KR); KIM, Nam Young, Daejeon 34122 (KR); KIM, Yong Nam, Daejeon 34122 (KR); YOON, Se Hyun, Daejeon 34122 (KR); LEE, Ju Young, Daejeon 34122 (KR); CHOI, Jongkwan, Daejeon 34122 (KR)
(74) Representative: Plasseraud IP
(86) International application number: PCT/KR2024/000033
(87) International publication number: WO 2024/147596

(57) **Abstract**

The present invention is to provide an electrode supply device, an electrode assembly manufacturing apparatus using the electrode supply device, an electrode supply method, and an electrode assembly manufacturing method using the electrode supply method.

## Description

### [Technical Field]

This application claims priority to and the benefit of Korean Patent Application No. 10-2023-0000709 filed in the Korean Intellectual Property Office on January 3, 2023 and Korean Patent Application No. 10-2023-0185680 filed in the Korean Intellectual Property Office on December 19, 2023, the entire contents of which are incorporated herein by reference.

The present invention relates to an electrode supply device, an electrode assembly manufacturing apparatus using the electrode supply device, an electrode supply method, and an electrode assembly manufacturing method using the electrode supply method.

### [Background Art]

Secondary batteries can be recharged, unlike primary batteries, and may be formed to have a small size and a large capacity. Accordingly, a lot of research and development on the secondary batteries are currently in progress. As technology development and demand for mobile devices increase, the demand for secondary batteries as an energy source is sharply increasing.

Secondary batteries are classified into coin type batteries, cylindrical type batteries, prismatic type batteries, and pouch type batteries depending on a shape of a battery case. In a secondary battery, an electrode assembly mounted inside a battery case is a chargeable and dischargeable power generating device having a structure in which electrodes and a separator are stacked.

The electrode assembly may be approximately classified into a jelly-roll type electrode assembly in which a separator is interposed between a positive electrode and a negative electrode, each of which is provided in the form of a sheet coated with an active material, and then, the positive electrode, the separator, and the negative electrode are wound, a stack-type electrode assembly in which a plurality of positive and negative electrodes with a separator interposed therebetween are sequentially stacked, and a stack and folding-type electrode assembly in which stack-type unit cells are wound with a separation film having a long length.

The electrode assembly is mostly manufactured by receiving individual electrodes from a magazine in which a plurality of single sheet-type electrodes are stacked. There occurs a problem of separation of multiple sheets (electrodes) (stuck electrodes that are stuck together) that a plurality of electrodes are conveyed as being stuck to each other because an electrode to be supplied among a plurality of single sheet-type electrodes stacked in the magazine is not properly separated during the manufacturing process. If the electrodes are stacked while stuck together, defects occur in the electrode assembly.

Therefore, there is a need for a technique to properly monitor electrodes to be supplied among the plurality of electrodes stacked in the magazine in terms of the problem of separation of multiple electrodes and to separate electrodes with the problem of separation of multiple electrodes, if the problem occurs.

### [Detailed Description of the Invention]

### [Technical Problem]

The present invention is to provide an electrode supply device, an electrode assembly manufacturing apparatus using the electrode supply device, an electrode supply method, and an electrode assembly manufacturing method using the electrode supply method.

### [Technical Solution]

An exemplary embodiment of the present invention provides an electrode supply device including: a magazine unit in which a plurality of electrodes are stored; an electrode pickup unit configured to pick up and convey an uppermost electrode among the electrodes stored inside the magazine unit; and a stuck-electrodes separation unit configured to detect whether the electrodes conveyed by the electrode pickup unit and placed on the stuck-electrodes separation unit are stuck without being separated and to separate the stuck electrodes, wherein the stuck-electrodes separation unit is configured, when two or more electrodes among the electrodes stored in the magazine unit are picked up without being separated by the electrode pickup unit, to separate the two or more electrodes from each other.

An exemplary embodiment of the present invention provides an electrode assembly manufacturing apparatus for manufacturing an electrode assembly including a first electrode, a second electrode, and a separator arranged between the first electrode and the second electrode, electrode assembly manufacturing apparatus including: a first electrode supply unit configured to supply the first electrode to a stack table side; a second electrode supply unit configured to supply the second electrode to the stack table side; a separator supply unit configured to supply the separator to the stack table side; a stack table on which a stack in which the first electrode, the separator, and the second electrode are stacked such that the first electrode and the second electrode are alternately arranged is manufactured; and a press unit configured to heat and press the stack to adhere the first electrode, the separator, and the second electrode therebetween, thereby manufacturing an electrode assembly, wherein at least one of the first electrode supply unit and the second electrode supply unit includes the above-described electrode supply device.

An exemplary embodiment of the present invention provides an electrode supply method including: picking up, by an electrode pickup unit, an uppermost electrode among electrodes stacked inside a magazine unit (step a); moving the electrode picked up by the electrode pickup unit to a stuck-electrodes separation unit (step b); detecting whether electrodes placed on the stuck-electrodes separation unit are stuck without being separated (step c); holding a lowermost electrode of the electrodes when it is detected that the electrodes are stuck without being separated (step d); and conveying and supplying, by the electrode pickup unit, an electrode not held by the stuck-electrodes separation unit to a stack table side (step e).

An embodiment of the present invention provides an electrode assembly manufacturing method for manufacturing an electrode assembly including a first electrode, a second electrode, and a separator arranged between the first electrode and the second electrode, the electrode assembly manufacturing method including: supplying the first electrode to a stack table side; supplying the second electrode to the stack table side; supplying the separator to the stack table side; manufacturing a stack by stacking the first electrode, the separator, and the second electrode on the stack table; and heating and pressing the stack to adhere the first electrode, the separator, and the second electrode therebetween, thereby manufacturing an electrode assembly, wherein at least one of the supplying the first electrode to the stack table side and the supplying the second electrode to the stack table side includes the above-described electrode supply method.

### [Advantageous Effects]

The electrode supply device and the electrode supply method according to the exemplary embodiments of the present invention can prevent a problem of separation of multiple electrodes caused by contact between an electrode surface and an electrode surface or contact between the electrode surface and the separator.

The electrode assembly manufacturing apparatus and the electrode assembly manufacturing method according to the exemplary embodiments of the present invention can prevent the problem of separation of multiple electrodes. Therefore, when the electrode assembly is manufactured by the electrode assembly manufacturing apparatus and the electrode assembly manufacturing method, productivity can be improved.

### [Brief Description of Drawings]

FIG. 1 is a flow diagram schematically showing an electrode supply device according to an exemplary embodiment of the present invention.
FIG. 2 is a view showing an electrode pickup unit and a stuck-electrodes separation unit according to an exemplary embodiment of the present invention.
FIG. 3 is a flow diagram schematically showing an electrode supply device according to another exemplary embodiment of the present disclosure.
FIG. 4 is a plan view illustratively showing an electrode assembly manufacturing apparatus according to an exemplary embodiment of the present invention.
FIG. 5 is a front view showing a concept of the electrode assembly manufacturing apparatus according to the exemplary embodiment of the present invention.

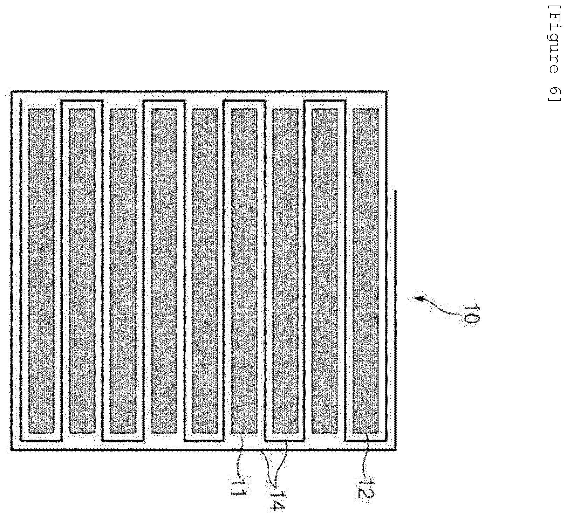

FIG. 6 is a cross-sectional view illustratively showing a general electrode assembly.
FIG. 7 is a conceptual view showing a pressing process in the electrode assembly manufacturing method or electrode assembly manufacturing apparatus according to the exemplary embodiment of the present invention.

### <Explanation of Reference Numerals and Symbols>

10: electrode assembly
11: first electrode
12: second electrode
14: separator
100: electrode assembly manufacturing apparatus
110: stack table
120: separator supply unit
121: separator heating unit
122: separator roll
130: first electrode supply unit
131: first electrode seating table
133: first electrode roll
134: first cutter
135: first conveyor belt
136: first electrode supply head
140: second electrode supply unit
141: second electrode seating table
143: second electrode roll
144: second cutter
145: second conveyor belt
146: second electrode supply head
150: first electrode stack unit
151: first suction head
153: first moving unit
160: second electrode stack unit
161: second suction head
163: second moving unit
170: holding mechanism
171: first holding mechanism
172: second holding mechanism
180: press unit
181: first pressing block
182: second pressing block
183, 184: press heater
210: magazine unit
220: electrode pickup unit
221: electrode suction head
222: electrode fixing unit
223: electrode conveying unit
230, 230a, 230b: stuck-electrodes separation unit
231: lower electrode suction head
232: plate
241: uppermost electrode
242, 242a, 242b: lower electrode
S: stack

### [Best Mode]

Hereinafter, exemplary embodiments of the present invention will be described in detail such that one skilled in the art to which the present invention belongs can readily implement the same. However, the present invention may be embodied in various different forms and is not limited to the configurations described herein.

When one part "includes", "comprises" or "has" one constituent element in the present specification, unless otherwise specifically described, this does not mean that another constitutional element is excluded but means that another constitutional element may be further included.

In the present specification, 'p to q' means a range of 'p or more and q or less'.

When describing the present invention, detailed descriptions of related known technologies that may unnecessarily obscure the gist of the present invention will be omitted.

In the present specification, the 'electrode magazine unit' performs the function of stacking electrodes in a certain space therein like bullets in a magazine.

An exemplary embodiment of the present invention provides an electrode supply device including: a magazine 210 unit in which a plurality of electrodes are stored; an electrode pickup unit 220 configured to pick up and convey an uppermost electrode among the electrodes stored inside the magazine unit 210; and a stuck-electrodes separation unit 230 configured to detect whether the electrodes conveyed by the electrode pickup unit 220 and placed on the stuck-electrodes separation unit are stuck without being separated and to separate the stuck electrodes, wherein the stuck-electrodes separation unit 230 is configured, when two or more electrodes among the electrodes stored in the magazine unit 210 are picked up without being separated by the electrode pickup unit 220, to separate the two or more electrodes from each other.

In the present specification, the 'electrode' means including the electrode and/or a semi-finished product of the electrode. In addition, the semi-finished product of the electrode refers to all semi-assembled products related to the electrode, such as a coated electrode, a rolled electrode, and a notched electrode manufactured in the process of manufacturing an electrode assembly and a secondary battery including the electrode assembly. That is, in the present specification, electrodes or semi-finished products of electrodes may be stacked in the magazine unit.

In the electrode supply device according to an exemplary embodiment of the present invention, a plurality of electrodes stored in the magazine unit 210 may be sequentially stacked. The electrode supply device is characterized by fixing an electrode in contact with an uppermost electrode among the electrodes stacked in the magazine unit 210. Due to the above characteristics, only the uppermost electrode can be more easily separated, and the problem of separation of multiple electrodes caused due to contact between an electrode surface and an electrode surface can be prevented.

As a result, when the electrode assembly is manufactured by the electrode assembly manufacturing apparatus according to an exemplary embodiment of the present invention, productivity can be improved.

The electrode supply device according to an exemplary embodiment of the present invention may include a magazine unit 210 in which a plurality of electrodes are stored and stacked. The magazine unit 210 performs functions of storing and stacking electrodes.

The electrode supply device according to an embodiment of the present invention may include an electrode pickup unit 220 that picks up an uppermost electrode among the electrodes stacked inside the magazine unit 210 and conveys the electrode to a stuck-electrodes separation unit 230 or a stack table.

More specifically, in an exemplary embodiment of the present invention, the electrode pickup unit 220 may include an electrode fixing unit 222 for fixing the uppermost electrode; and an electrode conveying unit 223 for conveying the uppermost electrode to the stuck-electrodes separation unit 230 or stack table.

In the present specification, the 'electrode fixing unit' performs the function of picking up the uppermost electrode among the plurality of electrodes stored inside the magazine unit 210, and the 'stuck-electrodes separation unit' performs the function of holding a lower surface of an electrode in contact with the uppermost electrode of the electrodes stacked in the magazine unit 210, so they are different in terms of functionality.

In an exemplary embodiment of the present invention, the electrode fixing unit 222 includes an electrode suction head 221, and can fix the uppermost electrode with a suction force of the electrode suction head 221.

In an exemplary embodiment of the present invention, if the electrode pickup unit 220 picks up the uppermost electrode and two or more electrodes together, the stuck-electrodes separation unit 230 can separate the other electrodes in contact with the uppermost electrode from the uppermost electrode.

For reference, the electrode pickup unit 220 should pick up only one electrode of the electrodes stored in the magazine unit 210. However, two or more electrodes may be picked up together due to being stuck to each other caused by bonding force between the electrodes, vacuum adsorption force between the electrodes, or the like, which is called a problem of separation of multiple electrodes. The separation of multiple electrodes may be understood as two or more electrodes stuck together.

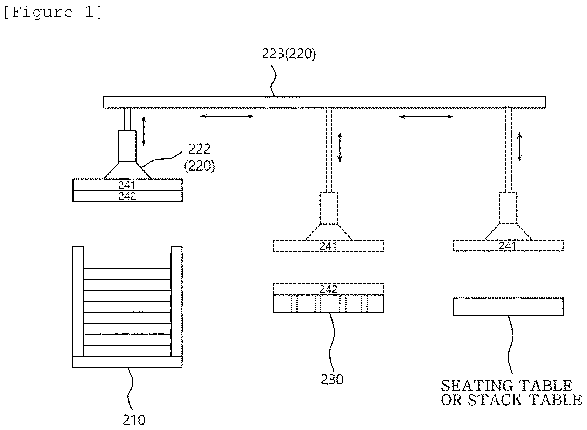

In an exemplary embodiment, referring to FIG. 1, the stuck-electrodes separation unit 230 may be positioned between the magazine unit 210 and a seating table or stack table described below.

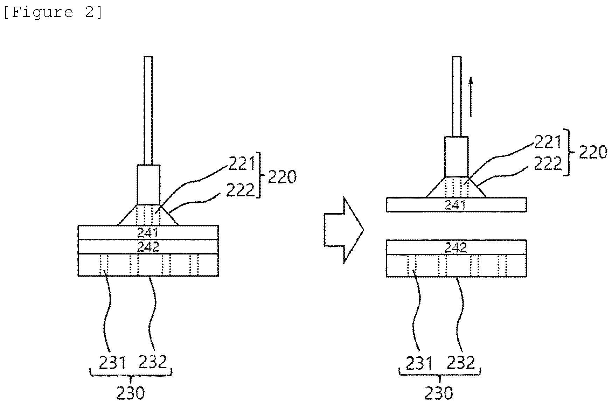

More specifically, referring to FIG. 2, the stuck-electrodes separation unit 230 may include a plate 232 including a lower electrode suction head 231 that can vacuum suction a lower surface of an electrode 242 (hereinafter, referred to as 'lower electrode') in contact with the uppermost electrode 241.

That is, in an exemplary embodiment of the present invention, the stuck-electrodes separation unit 230 may include a plate 232 including a lower electrode suction head 231 that can vacuum suction a lower surface of the lower electrode 242 in contact with the uppermost electrode 241, the electrode pickup unit 220 may include an electrode fixing unit 222 that fixes the uppermost electrode 241, and an electrode conveying unit 223 that conveys the uppermost electrode fixed by the electrode fixing unit 222 to the stack table, and the electrode fixing unit 222 may include an electrode suction head 221 that can vacuum suction an upper surface of the uppermost electrode.

Here, the lower surface of the lower electrode refers to a direction opposite to the pickup direction of the uppermost electrode among the electrodes stacked inside the magazine unit 210. In other words, the lower surface of the lower electrode refers to a surface opposite to a surface facing the uppermost electrode of two opposite surfaces of the lower electrode.

The stuck-electrodes separation unit 230 fixes a lower surface of a lower electrode 242 in contact with the uppermost electrode, thereby making it possible to pick up and convey only the uppermost electrode 241 among the two or more electrodes placed on the stuck-electrodes separation unit 230 by the electrode pickup unit 22.

Although the electrode pickup unit 220 and the stuck-electrodes separation unit 230 are described as picking up or fixing an electrode by vacuum adsorption, they are not limited thereto. For example, any means capable of fixing an electrode may be used without any limitation.

For example, the electrode pickup unit 220 and the stuck-electrodes separation unit 230 may physically fix an electrode using an adhesive tape or the like. Alternatively, the electrode pickup unit 220 and the stuck-electrodes separation unit 230 may fix electrodes by electrostatic force between the electrode and the electrode fixing unit 222 and between the electrode and the plate 232.

In addition, the stuck-electrodes separation unit 230 according to the present invention can fix the lower electrode by vacuum adsorption, and then physical force may be applied to the stuck-electrodes separation unit 230 or the electrode from the outside. For example, after the stuck-electrodes separation unit 230 fixes the electrode by vacuum suction, vibration may be applied to the plate 232 or wind may be applied between the uppermost electrode and the lower electrode.

Specifically, the stuck-electrodes separation unit 230 may be provided with a plurality of lower electrode suction heads 231 that can vacuum adsorb the lower electrode. The plurality of lower electrode suction heads 231 may be provided in a plurality of pairs in each of which the lower electrode suction heads are paired with each other. The plurality of lower electrode suction heads 231 may be arranged on the plate 232 so that they can slide in the horizontal direction on the plate 232.

The plurality of lower electrode suction heads 231 adsorb and fix the lower electrode, and apply vibration force to the lower electrode while vibrating. While the lower electrode suction heads 231 spread in a longitudinal direction of the lower electrode while vibrating, they can apply physical force to separate the electrodes from each other if the plurality of electrodes are placed with being stuck together on the stuck-electrodes separation unit 230.

The operation that the plurality of lower electrode suction heads 231 spread may be an operation of slightly retracting and spreading the lower electrode suction heads in a direction horizontal to the electrodes placed on the plate 232. That is, the operation may be an operation of moving the paired lower electrode suction heads toward and then away from each other, in the longitudinal direction of the lower electrode.

The electrode supply device according to the present invention may include at least one stuck-electrodes separation unit 230.

When the electrode pickup unit 220 picks up two lower electrodes in addition to the uppermost electrode, the electrode supply device may include two stuck-electrodes separation units 230.

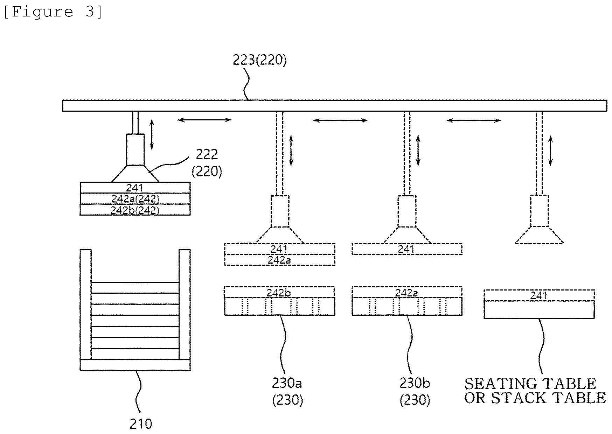

Referring to FIG. 3, a first stuck-electrodes separation unit 230a fixes a lower electrode 242b, which is not in contact with the uppermost electrode 241, and the electrode pickup unit 220 re-picks up and conveys the uppermost electrode 241 and a lower electrode 242a in contact with the uppermost electrode to a second stuck-electrodes separation unit 230b.

Then, the second stuck-electrodes separation unit 230b again fixes the lowermost electrode 242a, and the electrode pickup unit 220 separates the uppermost electrode 241 from the lowermost electrode 242a and conveys the same to the stack table.

In an exemplary embodiment of the present invention, the plate 232 may further includes a sensor unit (not shown) that determines whether two or more electrodes are stacked on one surface of the plate 232; and a control unit (not shown) that starts vacuum suction of the lower electrode suction head 231 for the lower surface of the lower electrode in contact with the uppermost electrode when the sensor unit determines that two or more electrodes are stacked.

Alternatively, when the sensor unit determines that only one electrode is stacked on one surface of the plate 232, the control unit does not start vacuum suction of the lower electrode suction head 231.

In an exemplary embodiment of the present invention, the vacuum suction force of the lower electrode suction head 231 and the electrode suction head 221 may be greater than the bonding force between two or more electrodes stacked on the stuck-electrodes separation unit 230. In this case, the bonding force may include any one of physical adsorption force, electrostatic force, and adhesive force between two or more electrodes picked up by the electrode pickup unit 220.

The vacuum suction force of the lower electrode suction head 231 and the electrode suction head 221 may be the same.

For example, when two electrodes are stacked on the stuck-electrodes separation unit 230, each of the two electrodes may be separated by the vacuum suction force of each of the electrode suction head 221 and the lower electrode suction head 231.

Alternatively, the vacuum suction force of the lower electrode suction head 231 may be greater than the vacuum suction force of the electrode suction head 221. Therefore, when separating two electrodes, the electrode fixed to the lower electrode suction head 231 can be prevented from being separated from the lower electrode suction head 231.

Alternatively, the vacuum suction force of the lower electrode suction head 231 may be smaller than the suction force of the electrode suction head 221.

For example, when one electrode is stacked on the stuck-electrodes separation unit 230 and the control unit starts vacuum suction of the lower electrode suction head 231, the electrode stacked on the stuck-electrodes separation unit 230 should be conveyed to the seating table or stack table by the electrode pickup unit 220.

Therefore, when the above condition is satisfied, the electrode pickup unit 220 can easily convey the electrode stacked on the stuck-electrodes separation unit 230 to the seating table or stack table.

In an exemplary embodiment of the present invention, an electrode seating table may be further included on which the electrode conveyed by the electrode supply device unit is seated and positionally aligned. The electrode seated on the electrode seating table may be stacked on the stack table by an electrode stack unit, which will be described below.

An exemplary embodiment of the present invention provides an electrode assembly manufacturing apparatus for manufacturing an electrode assembly including a first electrode, a second electrode, and a separator arranged between the first electrode and the second electrode, the electrode assembly manufacturing apparatus including: a first electrode supply unit configured to supply the first electrode to a stack table side; a second electrode supply unit configured to supply the second electrode to the stack table side; a separator supply unit configured to supply the separator to the stack table side; a stack table on which a stack in which the first electrode, the separator, and the second electrode are stacked such that the first electrode and the second electrode are alternately arranged between folds of the separator is manufactured; and a press unit configured to heat and press the stack to adhere the first electrode, the separator, and the second electrode therebetween, thereby manufacturing an electrode assembly, wherein at least one of the first electrode supply unit and the second electrode supply unit includes the above-described electrode supply device.

In an exemplary embodiment of the present invention, at least one of the first electrode supply unit and the second electrode supply unit includes the electrode supply device described above.

That is, at least one or both of the first electrode supply unit and the second electrode supply unit may supply the first electrode and the second electrode, respectively, using the electrode supply device according to the present invention.

In other words, the electrode assembly manufacturing apparatus according to an exemplary embodiment of the present invention may include an electrode supply unit for supplying an electrode to the stack table, and the electrode supply unit may include an electrode seating table on which an electrode is seated before the electrode is stacked on the stack table by the electrode stacking unit. In addition, an electrode conveyed by the electrode supply device according to the present invention may be seated and positionally aligned on the electrode seating table. The electrode whose position is aligned may be stacked on the stack table by the electrode stacking unit. Additionally, the electrode may be a first electrode or a second electrode.

In an exemplary embodiment, the electrode assembly manufacturing apparatus of the present invention may alternately arrange the first electrode and the second electrode between folds of the separator. Manufacturing a stack in which the first electrode and the second electrode are stacked in the form of being alternately arranged between respective folds of the separator is referred to as zigzag folding. However, the electrode supply device of the present invention is not limited to electrode assemblies manufactured by the zigzag folding method and can also be applied to other types, that is, the lamination and stacking (L&S) process.

In the present specification, the stack may correspond to an unfinished electrode assembly. Additionally, in the present specification, a top end and a bottom end of the electrode assembly may be located at positions corresponding to an upper surface and a lower surface of the stack, respectively, or positions corresponding to a bottom surface and a top surface of the unfinished electrode assembly.

That is, in an exemplary embodiment of the present invention, the first electrode supply unit may include the first electrode supply device, and the second electrode supply unit may include the second electrode supply device. The first electrode supply device and the second electrode supply device may each be the electrode supply device according to the present invention.

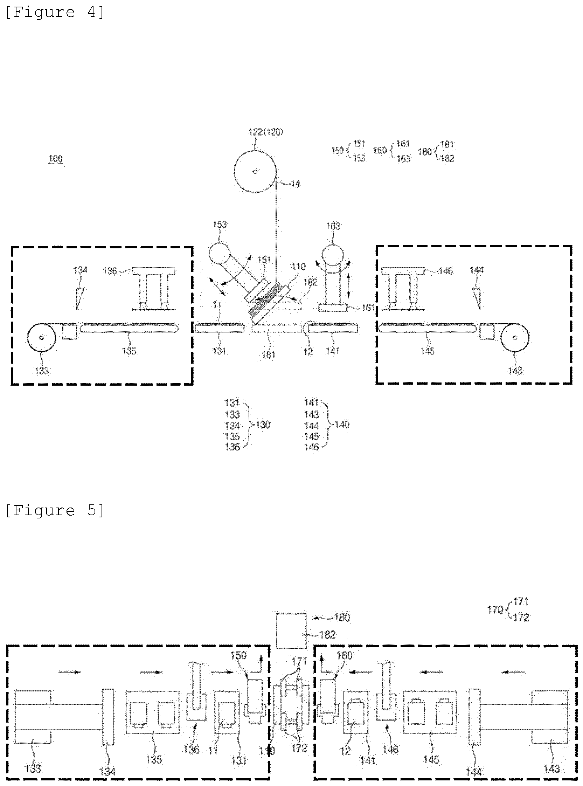

Additionally, referring to FIGS. 4 and 5, in the electrode assembly manufacturing apparatus 100 according to an exemplary embodiment of the present invention, the first electrode supply unit 130 may include a first electrode seating table 131 on which the first electrode is seated before being stacked on the stack table 110 by a first electrode stack unit 150, and the second electrode supply unit 140 may include a second electrode seating table 141 on which the second electrode is seated before being stacked on the stack table 110 by a second electrode stack unit 160.

The first electrode stack unit 150 may include a first suction head 151 and a first moving unit 153. The first suction head 151 can vacuum-suction the first electrode 11 seated on the first electrode seating table 131.

The second electrode stack unit 160 can stack the second electrode on the stack table 110. Here, the second electrode stack unit 160 may have the same structure as the first electrode stack unit 150 described above. In this case, the second electrode stack unit 160 may include a second suction head 161 and a second moving unit 163.

In an exemplary embodiment of the present invention, in order to stack the first electrode 11, the separator 14, and the second electrode 12 such that the first electrode 11 and the second electrode 12 are alternately arranged between the folds of the separator, a method in which the stack table is moved left and right, a method in which the separator 14 is moved left and right, or a method in which the stack table is rotated may be used, and general techniques in the relevant field may be applied to such methods.

The electrode assembly manufacturing apparatus according to an exemplary embodiment of the present invention may include a stack table moving unit for moving the stack table 110 left and right, or a separator guide unit for moving the separator left and right. In addition, the stack table moving unit and the separator guide unit are not limited in forms as long as they respectively perform the functions of moving the stack table 110 and the separator left and right, and devices generally used in the relevant field may be used.

The secondary battery manufacturing apparatus according to an exemplary embodiment of the present invention may further include a holding mechanism 170 for gripping and fixing the stack during a process of manufacturing the stack.

When the first electrode 11 or the second electrode 12 is stacked on the stack table 110, the holding mechanism 170 can grip and fix the first electrode 11 or the second electrode 12 to the stack table 110. The holding mechanism 170 may include, for example, a first holding mechanism 171 and a second holding mechanism 172, and can fix both sides of the first electrode 11 or the second electrode 12.

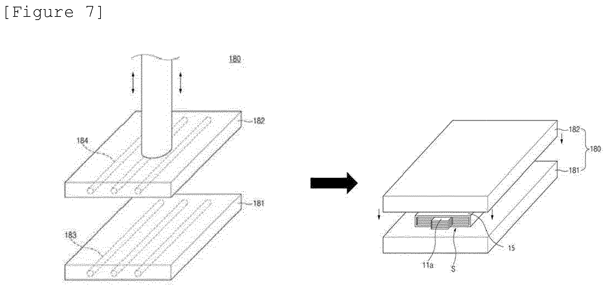

In an exemplary embodiment of the present invention referring to FIG. 7, the press unit 180 may further include a pair of pressing blocks 181 and 182 and press heaters 183 and 184 for heating the pressing blocks 181 and 182, in which the pair of pressing blocks 181 and 181 may move in directions facing each other to surface-press the stack and the press heater 183 and 183 may heat the stack. In this case, in an exemplary embodiment of the present invention, the pair of pressing blocks 181 and 182 may include the press heaters 183 and 184 therein.

In an exemplary embodiment of the present invention, the stack may be heated using a heater included inside the stack table.

For pressure and temperature conditions of heating and pressing by the press unit 180, description of a condition of a heat-press step described below may be applied. The same also applies to the time (time condition) during which heating and pressure are applied.

Here, the pressure condition refers to a pressure applied by the pair of pressing blocks (or the pressing blocks for the stack table), and the temperature condition refers to a temperature of heat applied by the press heater or a heater included inside the stack table.

An electrode supply method according to an exemplary embodiment of the present invention may include the steps of picking up the uppermost electrode among the electrodes stacked inside the magazine unit and separating two or more picked up electrodes.

Specifically, there is provided an electrode supply method including the steps of: picking up, by an electrode pickup unit, an uppermost electrode among electrodes stacked inside a magazine unit (step a); moving the electrode picked up by the electrode pickup unit to a stuck-electrodes separation unit (step b); detecting whether electrodes placed on the stuck-electrodes separation unit are stuck without being separated (step c); holding a lowermost electrode of the electrodes when it is detected that the electrodes are stuck without being separated (step d); and conveying and supplying, by the electrode pickup unit, an electrode not held by the stuck-electrodes separation unit to a stack table side (step e).

In other words, steps (a) to (e) may be included in the step of separating the two or more picked up electrodes.

The electrode supply method according to an exemplary embodiment of the present invention has a feature of separating a plurality of electrodes when two or more electrodes are picked up from the magazine unit. Due to the above feature, only the uppermost electrode can be more easily separated, and the problem of separation of multiple electrodes in which two electrodes are supplied when supplying electrodes to the stack table can be prevented.

As a result, when the electrode assembly is manufactured by the electrode assembly manufacturing method according to an exemplary embodiment of the present invention, productivity can be improved.

In an exemplary embodiment of the present invention, the electrode assembly manufacturing method may further include the steps of cutting an electrode in a form of a sheet and stacking the electrode in the magazine unit.

More specifically, in an exemplary embodiment of the present invention, the electrode assembly manufacturing method may further include the steps of cutting an electrode in a form of a sheet and stacking two or more cut electrodes in the magazine unit.

In an exemplary embodiment of the present invention, the step (a) may include the step of, by the electrode pickup unit, vacuum suctioning an upper surface of an uppermost electrode among the electrodes stacked in the magazine unit and picking up the uppermost electrode.

In an exemplary embodiment of the present invention, the step (d) is a step of, by the stuck-electrodes separation unit, vacuum suctioning a lower surface of a lower electrode in contact with the uppermost electrode picked up by the electrode pickup unit, thereby fixing the lower electrode.

Specifically, the step (d) may include the step of, when it is determined that two or more electrodes are stacked on the stuck-electrodes separation unit, starting vacuum suction for the lower surface of the lower electrode in contact with the uppermost electrode among the electrodes stacked on the stuck-electrodes separation unit.

In an exemplary embodiment of the present invention, the step (e) is a step of separating two or more electrodes by the vacuum suction force of the electrode pickup unit and the stuck-electrodes separation unit, and conveying the uppermost electrode fixed to the electrode pickup unit to the stack table.

In another exemplary embodiment of the present invention, the electrode supply method may include the step (d-1) of, when it is determined that one electrode is stacked on the stuck-electrodes separation unit, not starting vacuum suction by the stuck-electrodes separation unit. For example, the electrode supply method of the present invention may include the step (d-1) instead of the step (d).

In an exemplary embodiment of the present invention, a suction force acting on an electrode not held by the stuck-electrodes separation unit in the step (e) and a force holding the lowermost electrode in the step (d) may be greater than a bonding force between the stuck-electrodes. For example, the bonding force may include any one of physical adsorption force, electrostatic force, and adhesive force between the uppermost electrode and the lower electrode.

In addition, the suction force acting on the electrode not held by the stuck-electrodes separation unit in the step (e) may be the same as the force holding the lowermost electrode in the step (d).

If the described-above condition is satisfied, the uppermost electrode and the lower electrode can be efficiently separated and supplied to the stack table by the electrode suction head and the lower electrode suction head.

Alternatively, the force holding the lowermost electrode in the step (d) may be greater than the suction force acting on the electrode not held by the stuck-electrodes separation unit in the step (e).

When the described-above condition is satisfied, the electrode fixed to the lower electrode suction head (or the lowermost electrode) can be prevented from being separated from the lower electrode suction head by the suction force acting on an electrode not held by the stuck-electrodes separation unit in the step (e).

Alternatively, when only the uppermost electrode is picked up in the step (a), the suction force acting on the lower surface of the lower electrode in the step (d) does not act, or may be smaller than the suction force acting on the electrode not held by the stuck-electrodes separation unit in the step (e).

When the above-described condition is satisfied, the problem that the uppermost electrode stacked on the stuck-electrodes separation unit cannot be conveyed to the stack table due to the force holding the lowermost electrode in the step (d) can be prevented.

The electrode supply method according to an exemplary embodiment of the present invention may further include the step of, by the electrode pickup unit, conveying an electrode not fixed to the first stuck-electrodes separation unit to the second stuck-electrodes separation unit.

In this case, in the step (b), the stuck-electrodes separation unit may be a first stuck-electrodes separation unit.

That is, the electrode supply method according to an embodiment of the present invention can prevent the problem of separation of multiple electrodes in the electrode assembly by repeating the step of separating the two or more picked up electrodes by the two or more stuck-electrodes separation units.

In other words, in the electrode supply method according to an exemplary embodiment of the present invention, a plurality of stuck-electrodes separation units may be arranged in succession, and the steps (b) to (e) may be repeated multiple times.

In an exemplary embodiment of the present invention, the step (d) may include the steps of vacuum adsorbing a lower surface of the lowermost electrode by a plurality of lower electrode suction heads; and separating the stuck electrodes from each other by a horizontal movement operation of the plurality of lower electrode suction heads moving toward and away from each other in a longitudinal direction of the electrode while vibrating.

In other words, in the step (d), in addition to the lower electrode binding force of the lower electrode suction head, the lower electrode suction head may vibrate, or an air supply unit may be provided above the stuck-electrodes separation unit to spray air between the stuck-electrodes, thereby separating the stuck electrodes from each other.

An embodiment of the present invention provides an electrode assembly manufacturing method for manufacturing an electrode assembly including a first electrode, a second electrode, and a separator arranged between the first electrode and the second electrode, the electrode assembly manufacturing method including the steps of: supplying the first electrode to a stack table side; supplying the second electrode to the stack table side; supplying the separator to the stack table side; manufacturing a stack by stacking the first electrode, the separator, and the second electrode on the stack table; and heating and pressing the stack to adhere the first electrode, the separator, and the second electrode therebetween, thereby manufacturing an electrode assembly, wherein at least one of the step of supplying the first electrode to the stack table side and the step of supplying the second electrode to the stack table side includes the electrode supply method of any one of claims 8 to 12.

In an exemplary embodiment of the present invention, at least one of the step of supplying the first electrode to the stack table side and the step of supplying the second electrode to the stack table side includes the electrode supply method.

In an exemplary embodiment of the present invention, the step of manufacturing a stack by stacking the first electrode, the separator, and the second electrode on a stack table may include the steps of:
(S1) stacking the second electrode on the stack table;
(S2) stacking the separator on the stack table such that the separator covers an upper surface of the second electrode stacked on the stack table;
(S3) stacking the first electrode on a surface of the separator covering the upper surface of the second electrode, which is opposite to a surface in contact with the second electrode;
(S4) additionally supplying the separator to cover an upper surface of the first electrode;
(S5) stacking the second electrode on a surface of the separator covering the upper surface of the first electrode, which is opposite to a surface in contact with the first electrode; and
   (S6) additionally supplying the separator to cover an upper surface of the second electrode, and
may be configured to repeat the steps (S1) to (S6) one or more times. That is, this case means a case where an electrode is first stacked on the stack table.

In an exemplary embodiment of the present invention, the step of manufacturing a stack by stacking the first electrode, the separator, and the second electrode on a stack table may include the steps of:
(SS1) stacking the separator on the stack table;
(SS2) stacking the first electrode on an upper surface of the separator;
(SS3) additionally supplying the separator to cover an upper surface of the first electrode;
(SS4) stacking the second electrode on a surface of the separator covering the upper surface of the first electrode, which is opposite to a surface in contact with the first electrode; and
(SS5) additionally supplying the separator to cover an upper surface of the second electrode, and
may be configured to repeat the steps (SS1) to (SS5) one or more times. That is, this case means a case where a separator is first stacked on the stack table.

In an exemplary embodiment of the present invention, the step (S4), step (S6), step (SS3), and step (SS5), that is, the step of additionally supplying the separator to cover the upper surface of the first electrode or second electrode may be performed by one of a method in which the stack table is moved left and right, a method in which the separator is moved left and right, and a method in which the stack table is rotated. That is, the separator may be folded in a zigzag shape, and the stack may be manufactured by a zigzag folding process in which the first electrode and the second electrode are alternately arranged between the folds of the separator.

As described in the electrode assembly manufacturing apparatus, the electrode supply method of the present invention is not limited to the zigzag folding process and can be applied to other types of processes.

Although the present invention has been described in detail with reference to the specific examples, this is intended to specifically describe the present invention, and the electrode assembly manufacturing apparatus according to the present invention is not limited thereto. It is apparent that various implementations are possible by one skilled in the art within the technical spirit of the present invention.

## Claims

1. An electrode supply device comprising:
a magazine unit in which a plurality of electrodes are stored;
an electrode pickup unit configured to pick up and convey an uppermost electrode among the electrodes stored inside the magazine unit; and
a stuck-electrodes separation unit configured to detect whether the electrodes conveyed by the electrode pickup unit and placed on the stuck-electrodes separation unit are stuck without being separated and to separate the stuck electrodes,
wherein the stuck-electrodes separation unit is configured, when two or more electrodes among the electrodes stored in the magazine unit are picked up without being separated by the electrode pickup unit, to separate the two or more electrodes from each other.

2. The electrode supply device of claim 1, wherein the stuck-electrodes separation unit comprises a plate, which comprises a lower electrode suction head configured to suction one surface of an electrode not in contact with the electrode pickup unit,
wherein the electrode pickup unit comprises an electrode fixing unit configured to fix the uppermost electrode; and an electrode conveying unit configured to convey the uppermost electrode to the stuck-electrodes separation unit or stack table, and
wherein the electrode fixing unit comprises an electrode suction head capable of vacuum suctioning an upper surface of the uppermost electrode.

3. The electrode supply device of claim 1, wherein the stuck-electrodes separation unit further comprises:
a sensor unit configured to determine whether electrodes conveyed from the magazine unit are stuck without being separated; and
a control unit configured, when the sensor unit determines that two or more electrodes are stuck without being separated, to perform control so that a lowermost electrode among the two or more electrodes is fixed.

4. The electrode supply device of claim 2, wherein a vacuum suction force of the lower electrode suction head is greater than a bonding force of the two or more electrodes.

5. The electrode supply device of claim 4, wherein the bonding force is any one of physical adsorption force, electrostatic force, and adhesive force between the two or more electrodes.

6. The electrode supply device of claim 3, wherein the stuck-electrodes separation unit is provided in plural, and
wherein when it is determined by the sensor unit that three or more electrodes are stuck without being separated, the electrodes are separated one by one so that all electrodes except the uppermost electrode are separated from each other.

7. The electrode supply device of claim 1, wherein the stuck-electrodes separation unit comprises a lower plate on which the placed electrode is seated and a plurality of electrode lower surface suction heads provided in the lower plate, and
wherein the plurality of electrode lower surface suction heads are configured to perform a horizontal movement operation of moving toward and away from each other in a longitudinal direction of the electrode while vibrating, thereby preventing the electrodes from being stuck without being separated.

8. An electrode assembly manufacturing apparatus for manufacturing an electrode assembly comprising a first electrode, a second electrode, and a separator arranged between the first electrode and the second electrode, the electrode assembly manufacturing apparatus comprising:
a first electrode supply unit configured to supply the first electrode to a stack table side;
a second electrode supply unit configured to supply the second electrode to the stack table side;
a separator supply unit configured to supply the separator to the stack table side;
the stack table on which a stack in which the first electrode, the separator, and the second electrode are stacked such that the first electrode and the second electrode are alternately arranged is manufactured; and
a press unit configured to heat and press the stack to adhere the first electrode, the separator, and the second electrode therebetween, thereby manufacturing an electrode assembly,
wherein at least one of the first electrode supply unit and the second electrode supply unit comprises the electrode supply device of any one of claims 1 to 7.

9. An electrode supply method comprising:
picking up, by an electrode pickup unit, an uppermost electrode among electrodes stacked inside a magazine unit (step a);
moving the electrode picked up by the electrode pickup unit to a stuck-electrodes separation unit (step b);
detecting whether electrodes placed on the stuck-electrodes separation unit are stuck without being separated (step c);
holding a lowermost electrode of the electrodes when it is detected that the electrodes are stuck without being separated (step d); and
conveying and supplying, by the electrode pickup unit, an electrode not held by the stuck-electrodes separation unit to a stack table side (step e).

10. The electrode supply method of claim 9, wherein the step (d) comprises vacuum suctioning a lower surface of an electrode not in contact with the electrode pickup unit.

11. The electrode supply method of claim 9, wherein the step (d) comprises:
vacuum suctioning a lower surface of a lowermost electrode by a plurality of electrode lower surface suction heads; and
separating the stuck electrodes from each other by a horizontal movement operation of the plurality of electrode lower surface suction heads moving toward and away from each other in a longitudinal direction of the electrode while vibrating.

12. The electrode supply method of claim 9, wherein the stuck-electrodes separation unit is arranged in plural in succession, and
wherein the steps (b) to (e) are repeated multiple times.

13. An electrode assembly manufacturing method for manufacturing an electrode assembly including a first electrode, a second electrode, and a separator arranged between the first electrode and the second electrode, the electrode assembly manufacturing method comprising:
supplying the first electrode to a stack table side;
supplying the second electrode to the stack table side;
supplying the separator to the stack table side;
manufacturing a stack by stacking the first electrode, the separator, and the second electrode on the stack table; and
heating and pressing the stack to adhere the first electrode, the separator, and the second electrode therebetween, thereby manufacturing an electrode assembly,
wherein at least one of the supplying the first electrode to the stack table side and the supplying the second electrode to the stack table side comprises the electrode supply method of any one of claims 9 to 12.
